# EUROPÄISCHE PATENTSCHRIFT

(11) **EP 2 151 221 B1**
(45) Veröffentlichungstag und Bekanntmachung des Hinweises auf die Patenterteilung: **11.09.2013**
(21) Anmeldenummer: 09161803.3
(22) Anmeldetag: 03.06.2009
(51) Int. Cl.: A61G 5/04, A61G 5/10

(54) **Hilfsantriebsvorrichtung für einen Rollstuhl und Rollstuhl mit Hilfsantriebsvorrichtung**
Helper drive device for a wheelchair and wheelchair with same
Dispositif d'entraînement auxiliaire pour un fauteuil roulant et fauteuil roulant doté d'un dispositif d'entraînement auxiliaire

(30) Priorität: 08.08.2008 DE 102008002993
(43) Veröffentlichungstag der Anmeldung: 10.02.2010
(73) Patentinhaber: Ulrich Alber GmbH, 72461 Albstadt-Tailfingen (DE)
(72) Erfinder: Bitzer, Paul-Gerhard, 72461, Albstadt (DE); Stumpp, Bernhard, 72406, Bisingen (DE)
(74) Vertreter: Staudt, Hans-Peter

(56) Entgegenhaltungen:
- EP-A1- 0 925 771
- EP-A2- 0 945 113
- EP-A2- 1 195 288
- EP-B1- 0 634 980
- US-A- 6 020 701
- US-A1- 2003 226 698

## Beschreibung

Die Erfindung betrifft eine Hilfsantriebsvorrichtung und einen Rollstuhl mit Hilfsantriebsvorrichtung.

Eine Hilfsantriebsvorrichtung der in Rede stehenden Art ist aus der EP 0 945 113 A2 bekannt. Eine derartige Hilfsantriebsvorrichtung für einen Rollstuhl weist einen Antriebsmotor auf, ein Laufrad, eine Sensoreinrichtung, die dazu ausgelegt ist, eine manuell in das Laufrad eingeleitete Antriebskraft zu erfassen, und eine Steuereinrichtung, die dazu ausgelegt ist, den Antriebsmotor zum Antrieb des Laufrades gemäß einem Unterstützungsgrad in Abhängigkeit von der manuell in das Laufrad eingeleiteten Antriebskraft anzusteuern.

US 6 020 701 A beschreibt eine Steuereinrichtung für eine eine elektromotorische Bremse aufweisende Hilfsantriebsvorrichtung der in Rede stehenden Art.

Derartige Rollstühle geben dem Rollstuhlfahrer die Möglichkeit, den Rollstuhl manuell anzutreiben, beispielsweise über entsprechenden Greifringe an den Laufrädern, unterstützen diesen manuellen Antrieb jedoch je nach Bedarf durch den oder die Antriebsmotoren. Zu diesem Zweck erfasst die Sensoreinrichtung die jeweils manuell in den Greifring eingeleitete Kraft und die Steuereinrichtung steuert den oder die Antriebsmotoren zum Antrieb des Laufrades gemäß einem Unterstützungsgrad in Abhängigkeit von der in den Greifring eingeleiteten Kraft an.

Antriebssysteme der in Rede stehenden Art sind somit dazu geeignet, den Rollstuhlfahrer physisch zu entlasten. Als Antriebskraft beziehungsweise Antriebsmoment wirken zum einen die manuell von dem Rollstuhlfahrer in das Laufrad, beispielsweise über einen Greifring eingeleitete manuelle Kraft und das hieraus resultierende Drehmoment und zusätzlich eine elektrische Antriebskraft beziehungsweise ein entsprechendes Antriebsdrehmoments des Antriebsmotors, die beziehungsweise das gemäß einem Unterstützungsgrad in Anhängigkeit von der manuell eingeleiteten Kraft dadurch erzeugt werden, dass die Steuereinrichtung den Antriebsmotor entsprechend ansteuert. Bei dieser Art des Betriebs wirken somit die manuelle Antriebskraft und das darauf resultierende Drehmoment und das Drehmoment des Antriebsmotors in gleicher Drehrichtung. Die beiden Drehmomente addieren sich demnach dem Betrage nach.

Im Ergebnis bringt der Rollstuhlfahrer somit nur einen Teil der zur Fortbewegung erforderlichen Kraft auf und kann sich deshalb ohne große Anstrengungen auch an Steigungen oder Gefällen bewegen. Das Verhältnis zwischen den manuell eingeleiteten Kräften und den durch den Elektromotor erzeugten Drehmomenten, d.h. der Unterstützungsgrad kann nach den persönlichen Bedürfnissen des Rollstuhlfahrers einstellbar und gegebenenfalls vorwählbar sein.

Beim Befahren von Steigungen oder Rampen sind vom Rollstuhlfahrer trotz motorischer Unterstützung am Greifring größere Kräfte zur Fortbewegung erforderlich als bei der Fahrt auf der Ebene. Zudem ist in der Regel in derartigen Fahrsituationen, d.h. an Steigungen oder Rampen, die Fortbewegungsgeschwindigkeit gering. Es kann deshalb passieren, dass der Rollstuhl in den Phasen des Umgreifens am Greifring soviel an Geschwindigkeit verliert, dass er auf Grund der Hangabtriebskraft zurückrollt, bevor der Rollstuhlfahrer eine neue Anschubbewegung am Greifring vollzieht.

Zudem ist es möglich, dass der Rollstuhlfahrer auf Grund der unterschätzten Steigung in eine Situation kommt, in der er nicht mehr in der Lage ist, die erforderlichen Kräfte in ausreichender Häufigkeit am Greifring aufzubringen, um eine Fortbewegung in der gewünschten Richtung zu bewirken. Möglicherweise muss er zwischen zwei Anschubbewegungen kurze Pausen einlegen. Hierbei besteht jedoch die Gefahr, dass der Rollstuhl seine Fahrtrichtung durch die Hangabtriebskraft ungewünscht umkehrt und zurückrollt.

Der Erfindung liegt die Aufgabe zugrunde, eine Hilfsantriebsvorrichtung der vorstehend erläuterten Art sowie einen mit einer derartigen Hilfsantriebsvorrichtung ausgerüsteten Rollstuhl bereitzustellen, die bzw. der der vorstehend erläuterten Problematik im Zusammenhang mit der unerwünschten Fahrrichtungsumkehr durch eine Hangabtriebskraft Rechnung trägt.

Die Lösung dieser Aufgabe ist in den Patentansprüchen 1 und 15 angegeben. Vorteilhafte Ausführungsformen sind in den Unteransprüchen definiert.

Die Steuereinrichtung der erfindungsgemäßen Hilfsantriebsvorrichtung weist einen Antirückroll-Betriebsmodus auf. Wenn die Steuereinrichtung in diesem Antirückroll-Betriebsmodus arbeitet, kann sie den Antriebsmotor so ansteuern, dass ein unbeabsichtigtes Rollen des Laufrades vermieden wird.

Es besteht somit die Möglichkeit, ein unbeabsichtigtes Rollen des Laufrades allein durch eine entsprechende Ausführung der Steuereinrichtung zu vermeiden, d.h. durch eine rein softwaretechnische Lösung. Hierzu werden vorzugsweise lediglich Signale und physikalische Größen verarbeitet, die bereits ohnehin für den Hilfsantriebsbetrieb des Rollstuhls vorhanden sind bzw. genutzt werden. Vorzugsweise können zudem bei einem Rollstuhl, der in üblicherweise zwei größere Antriebsräder und zwei antriebslose, kleinere und frei schwenkbare Laufräder aufweist, die beiden Antriebsräder hinsichtlich der Antirückroll-Funktion unabhängig von einander arbeiten.

Die erfindungsgemäße Hilfsantriebsvorrichtung kann ein unbeabsichtigtes Wegrollen des Rollstuhls verhindern, ohne dass eine mechanische Bremse verwendet wird.

Bei einer vorteilhaften Ausführungsform der erfindungsgemäßen Hilfsantriebsvorrichtung ist die Steuereinrichtung dazu ausgelegt, alternativ entweder in einem Normal-Betriebsmodus zu arbeiten, in dem das Vermeiden eines unbeabsichtigten Rollens des Laufrades außer Kraft gesetzt ist, und alternativ hierzu in dem Antirückroll-Betriebsmodus in dem der Antriebsmotor bei Bedarf so angesteuert wird, dass ein unbeabsichtigtes Rollen des Laufrades vermieden wird.

Der Normal-Betriebsmodus umfasst vorzugsweise eine Drehmomentsteuerung, die bewirkt, dass der Antriebsmotor zum Antrieb des Laufrades in Abhängigkeit von der manuell in das Laufrad eingeleiteten Antriebskraft angesteuert wird, wobei das Verhältnis zwischen manueller Antriebskraft und elektromotorischen Antriebsmoment dem Unterstützungsgrad entspricht.

Der Antirückroll-Betriebsmodus umfasst vorzugsweise eine Drehfrequenzregelung, die die Drehfrequenz des Laufrades regelt. Hierbei wird, um einen Stillstand zu erreichen, ein Sollwert von Null für die Drehfrequenz des Laufrades vorgegeben.

In dem Antirückroll-Betriebsmodus kann alternativ die Drehmomentsteuerung oder die Drehfrequenzregelung zum Einsatz kommen.

Hierdurch wird eine vorteilhafte Anpassung des Steuer- bzw. Regelverhaltens der Hilfsantriebsvorrichtung an bestimmte Betriebssituationen ermöglicht. Dementsprechend findet ein Wechsel zwischen Drehmomentsteuerung und Drehfrequenzregelung vorteilhafterweise in Abhängigkeit von Betriebsparametern statt. Diesbezüglich wird einzeln, gemeinsam oder in entsprechender Verknüpfung auf die Drehfrequenz des Laufrades, die Drehrichtung des Laufrades, die Größe der manuell in das Laufrad eingeleiteten Antriebskraft, die Richtung der manuell in das Laufrad eingeleiteten Antriebskraft, die Summe des aus der manuell in das Laufrad eingeleiteten Antriebskraft resultierenden Drehmoments und eines gemäß einem Unterstützungsgrad in Abhängigkeit von der manuell in das Laufrad eingeleiteten Antriebskraft durch den Antriebsmotor bereitstellbaren Drehmoments, das durch den Antriebsmotor aktuell bereit gestellte Drehmoment und den Wert eines Zeitschalters zugegriffen sowie gegebenenfalls auf weitere Werte oder Programmelemente.

Der Antirückroll-Betriebsmodus kann manuell einschaltbar und/oder ausschaltbar sein. Es können mehrere Unterstützungsgrad-Schalter vorgesehen sein, mit denen unterschiedliche Unterstützungsgrade vorwählbar sind. Der Antirückroll-Betriebsmodus kann über einen oder jeden der Unterstützungsgrad-Schalter oder auch über einen oder mehrere separate Schalter einschaltbar und/oder ausschaltbar sein.

In einer Ausführungsform der Erfindung kann die Steuereinrichtung sich beim Einschalten immer im Normal-Betriebsmodus befinden. Alternativ hierzu oder auch wahlweise kann sich die Steuereinrichtung beim Einschalten in demjenigen Betriebsmodus befinden, in dem sie sich beim vorherigen Ausschalten befand.

In an sich bekannter Weise kann die erfindungsgemäße Hilfsantriebsvorrichtung einen Greifring aufweisen, über den Kraft manuell in das Laufrad einleitbar ist. Der Antriebsmotor kann als Elektromotor und insbesondere als Nabenmotor ausgeführt sein. Ein derartiger Antriebsmotor kann zusammen mit einer wiederaufladbaren Batterie und der Steuereinrichtung in der Narbe des Laufrades angeordnet sein.

Die Erfindung wird im Folgenden anhand bevorzugter Ausführungsbeispiele in Verbindung mit den Zeichnungen erläutert, in denen
Fig. 1 eine Ausführungsform eines erfindungsgemäßen Rollstuhls mit einer erfindungsgemäßen Hilfsantriebsvorrichtung zeigt,
Fig. 2 ein erstes Ablaufdiagramm der Ausführungsform gemäß Fig 1 zeigt,
Fig. 3 ein zweites Ablaufdiagramm der Ausführungsform gemäß Fig 1 zeigt,
Fig. 4 ein drittes Ablaufdiagramm der Ausführungsform gemäß Fig 1 zeigt und
Fig. 5 ein viertes Ablaufdiagramm der Ausführungsform gemäß Fig 1 zeigt.

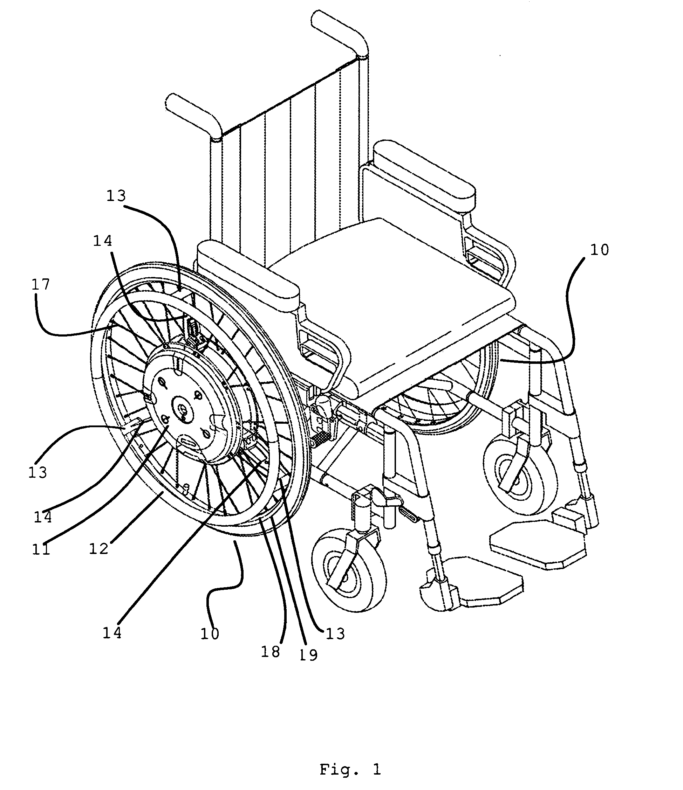

Fig. 1 zeigt in einer perspektivischen Darstellung einen Rollstuhl mit zwei Laufrädern 10. Jedes Laufrad 10 verfügt über eine Nabe 11, die mittels handelsüblicher Speichen 17 mit einer Felge 18 verbunden ist, auf der ein Reifen 19 aufgezogen ist. Im Inneren der Nabe 11 sind ein Antriebsmotor, der als Elektromotor ausgeführt ist (nicht gezeigt), eine wieder aufladbare Batterie (nicht gezeigt) und eine Steuereinrichtung (nicht gezeigt) angeordnet.

Ein Greifring 12 ist über drei Streben 13 und drei Speichenelemente 14 mit der Nabe 11 verbunden.

Wenn in den Greifring 12 eine manuelle Kraft eingeleitet wird, wird diese über die Streben 13 und die Speichenelemente 14 direkt auf die Nabe 11 übertragen. Eine Sensoreinrichtung erfasst die Wirkung der Kraft, die auf ein Speichenelement 14 einwirkt. Diese Wirkung ist zum einen eine in dem Speichenelement 14 erzeugte Spannung und zum anderen eine Verformung des Speichenelements. Jeweils mindestens eine dieser Wirkungen wird erfasst und dient als Maß für die in den Greifring 14 eingeleitete Kraft. Entsprechend diesem Maß wird der Antriebsmotor von der Steuerungseinrichtung zur Bereitstellung eines Drehmoments angesteuert. Hierbei können variable oder fest vorprogrammierte Unterstützungsgrade vorgesehen sein.

Geeignete derartige Sensoreinrichtungen beziehungsweise Sensoren sind beispielsweise in der EP 0 945 113 A2 offenbart.

Die Steuereinrichtung ist dazu ausgelegt, eine Antirückroll-Funktion (ARF) auszuüben, die rein softwaretechnisch realisiert ist. Es werden hierzu nur Signale und physikalische Größen verarbeitet, die bereits für den Rollstuhlbetrieb ohne diese Funktion vorhanden sind bzw. genutzt werden. Beide Antriebsräder arbeiten hinsichtlich dieser Funktion unabhängig voneinander.

In einer bevorzugten Ausführungsform arbeitet die Steuereinrichtung als Standardbetriebsart mit einer Drehmomentsteuerung. Dies bedeutet, dass der Antriebsmotor in Abhängigkeit vom gewählten oder durch sonstige Funktionen momentan eingestellten Unterstützungsgrad sowie der manuell in den Greifring 12 eingeleiteten Kraft so angesteuert wird, dass er ein bestimmtes Drehmoment abgibt.

In einem hierzu alternativ verfügbaren Antirückroll-Betriebsmodus arbeitet die Steuereinrichtung entweder gemäß der vorstehend erläuterten Drehmomentsteuerung oder wechselt bei Bedarf zu einer Drehfrequenzregelung, die die Drehfrequenz des Laufrades regelt, wobei der Sollwert der Drehfrequenz des Laufrades Null ist, was zum Stillstand des Laufrades führt.

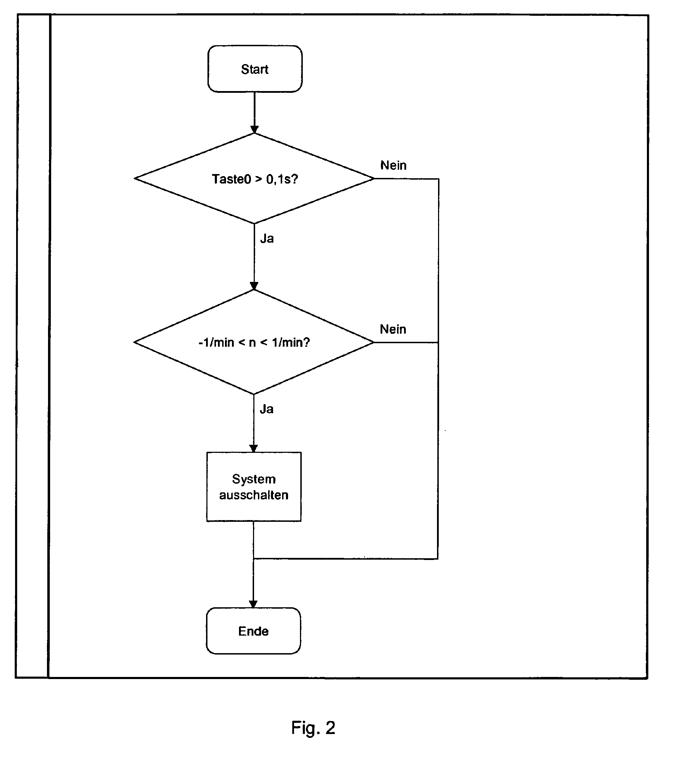

Im Folgenden wird zunächst in Verbindung mit Fig. 2 das Ausschalten der Steuereinrichtung und damit auch der Antirückroll-Funktion beschrieben. Wird ein im Ablaufdiagramm gemäß Fig. 2 als Taste0 bezeichneter Ausschalter länger als 0,1 Sekunde betätigt, erfolgt eine Abfrage, ob die Drehfrequenz des Laufrades größer als -1/min und kleiner als 1/min ist, d.h. ob sich das Rad im Stillstand befindet. Ist dies nicht der Fall, ist ein Ausschalten des Systems nicht möglich. Befindet sich das Laufrad im Stillstand, wird das System bei entsprechender Betätigung der Taste ausgeschaltet.

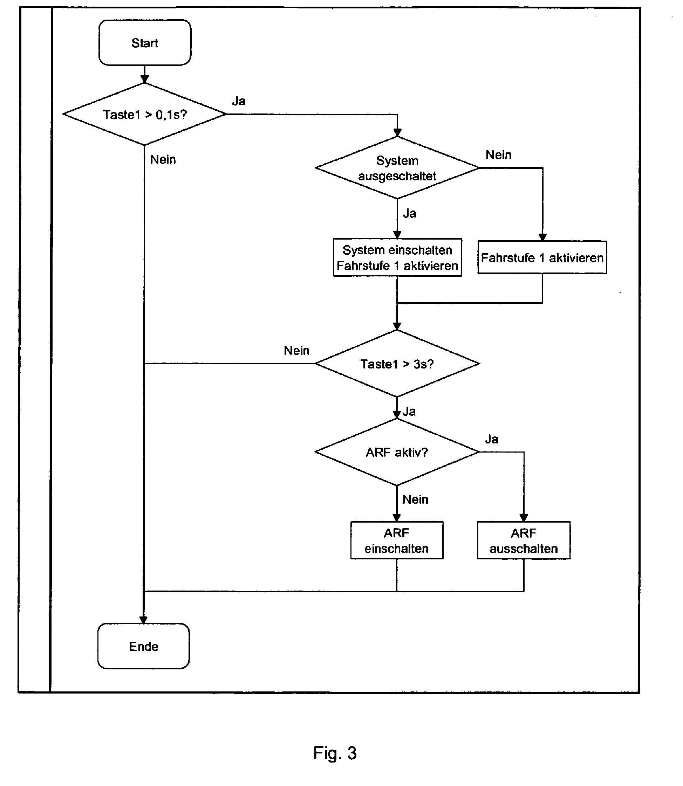

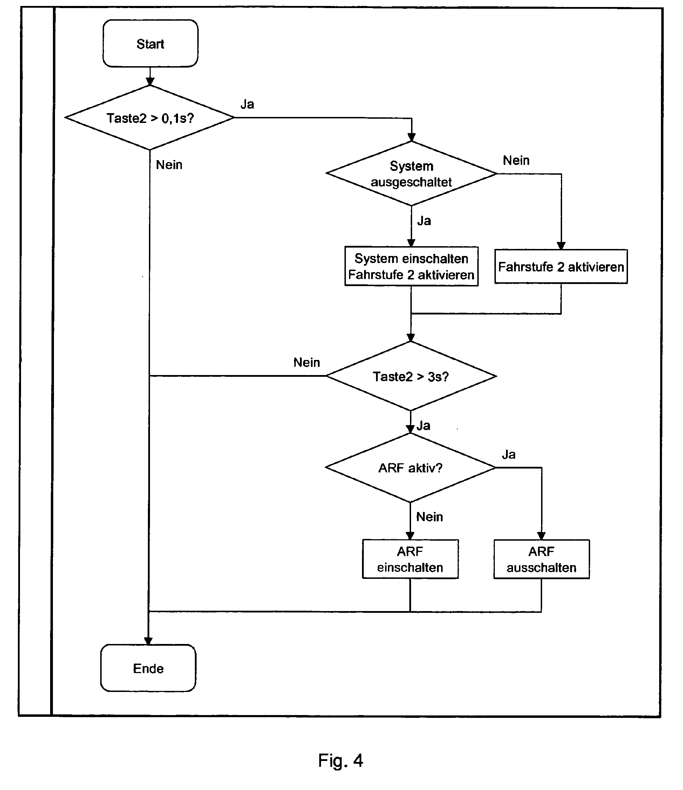

Das Einschalten des Systems an sich sowie der speziellen Antirückroll-Funktion wird im Folgenden anhand der Figuren 3 und 4 beschrieben. Erstere bezieht sich auf eine Taste1, d.h. eine einen ersten Unterstützungsgrad anwählende Einschalttaste und letztere auf einer Taste2, d.h. eine einen zweiten Unterstützungsgrad anwählende Taste. Es versteht sich, dass auch eine größere Anzahl von Tasten bereitgestellt sein können. Es versteht sich zudem, dass die Unterstützungsgrade einstellbar oder programmierbar sein können.

Wird eine der beiden Einschalttasten, in Figur 3 als Taste1 und in Figur 4 als Taste2 bezeichnet, länger als 0,1 Sekunde gedrückt, erfolgt zunächst eine Abfrage, ob das System ausgeschaltet ist. Ist dies der Fall, wird das System mit der jeweiligen Fahrstufe aktiviert. Ist das System eingeschaltet, wird die der jeweiligen Taste entsprechende Fahrstufe aktiviert. Die beiden Einschalttasten Taste1 und Taste2 können somit nicht nur zum Einschalten des Systems aus einem ausgeschalteten Zustand, sondern auch zum Umschalten von Fahrstufe 1 auf Fahrstufe 2 beziehungsweise Fahrstufe 2 auf Fahrstufe 1 verwendet werden.

Als nächstes erfolgt eine Abfrage, ob die jeweilige Taste länger als drei Sekunden gedrückt wird. Ist dies nicht der Fall, bleibt das System mit der jeweiligen Fahrstufe aktiviert. Die Steuereinrichtung arbeitet dann in dem Normal-Betriebsmodus mit einer Drehmomentsteuerung.

Wird die jeweilige Einschalttaste Taste1 oder Taste2 länger als drei Sekunden gedrückt, wird bei aktivierter Antirückroll-Funktion diese ausgeschaltet und bei deaktivierter Antirückrollfunktion diese eingeschaltet. Die Einschalttasten Taste1 und Taste2 können somit sowohl zum Einschalten als auch zum Ausschalten der Antirückroll-Funktion verwendet werden.

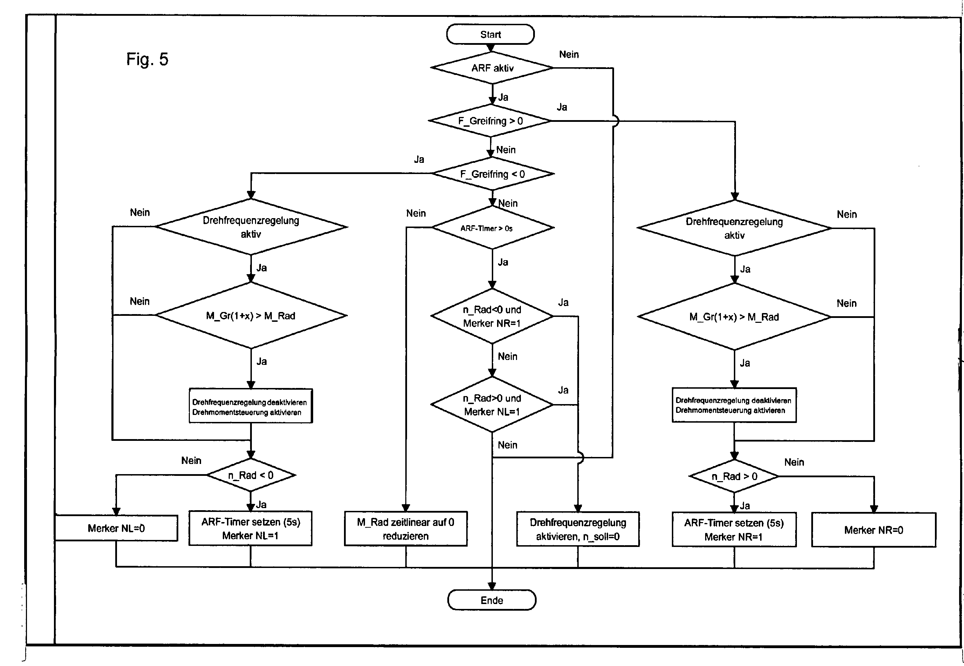

Die Arbeitsweise der Antirückroll-Funktion wird im Folgenden anhand des Flussdiagramms gemäß Figur 5 erläutert. Der diesbezügliche Programmablauf wird zyklisch wiederholt.

Zunächst findet eine Abfrage statt, ob die Antirückroll-Funktion aktiviert ist. Ist dies der Fall, wird festgestellt, ob eine Kraft in den Greifring eingeleitet wird, wobei nicht nur die Kraft an sich, sondern auch die Richtung der Kraft erfasst wird. Entsprechend dieser Richtung wird bei einer positiv definierten, d.h. in einer ersten Richtung wirkenden Kraft der rechte Teil des Flussdiagramms durchlaufen und bei einer negativ definierten, d.h. in Gegenrichtung zur ersten Richtung gerichteten Kraft der linke Teil des Flussdiagramms durchlaufen. Wird keine Kraft festgestellt, wird der Wert eines Zeitschalters (ARF-Timer) abgefragt. Ist dieser nicht größer 0 Sekunde, wird das durch den Antriebsmotor bereitgestellte Drehmoment M_Rad zeitlinear auf 0 reduziert.

Ist der Wert des Zeitschalters ARF-Timer größer als 0 Sekunde, findet eine Abfrage statt, ob die Drehzahl des Rades n_Rad kleiner als Null ist und gleichzeitig der Merker NR den Wert 1 hat oder die Drehzahl des Rades n_Rad größer Null ist und gleichzeitig der Merker NL auf 1 gesetzt ist. Sind beide Bedingungen nicht erfüllt, wird der Zyklus beendet und beginnt bei Start von vorne. Ist eine der beiden Bedingungen erfüllt, wird die Drehfrequenzregelung aktiviert und der Soll-Wert der Radfrequenz n_Soll auf 0 gesetzt. Die Bedeutung der beiden letztgenannten Abfragen und der Marker NR und NL werden im Folgenden im Zusammenhang mit dem jeweils linken bzw. rechten Zweig des Ablaufdiagramms gemäß Fig. 5 erläutert.

Der rechte Zweig des Flussdiagramms gemäß Fig. 5 wird dann aktiv, wenn bei aktivierter Antirückroll-Funktion am Greifring eine positive manuell eingeleitete Kraft, d.h. eine Kraft F_Greifring größer Null festgestellt wird. In diesem Fall erfolgt eine weitere Abfrage dahingehend, ob die Drehfrequenzregelung aktiv ist. Wie bereits erläutert, kommt im Antirückroll-Betriebsmodus grundsätzlich die Drehmomentsteuerung zum Einsatz. Ist die Drehfrequenzregelung bei einer positiven Kraft nicht aktiv, wird unter Umgehung der nächsten Abfrage und der daraus resultierenden Operation abgefragt, ob die Drehfrequenz des Rades N Rad größer Null ist. Die Werte größer Null im Zusammenhang mit der Drehzahl beziehungsweise Drehfrequenz des Rades und im Zusammenhang mit der am Greifring eingeleiteten manuellen Kraft bezieht sich jeweils darauf, dass sie in gleiche Richtung erfolgen. Wird die letztgenannte Abfrage mit ja beantwortete, d.h. dreht sich das Rad in der gleichen Richtung, in der auch am Greifring eine Kraft eingeleitet wurde, so bleibt weiterhin die Drehmomentsteuerung aktiviert, der Wert des Zeitschalters ARF-Timer wird auf 5 Sekunden gesetzt und der Merker NR auf den Wert 1.

Wird demgegenüber in der obersten Raute des rechten Zweigs des Flussdiagramms gemäß Fig. 5 festgestellt, dass die Drehfrequenzregelung aktiv ist, erfolgt eine Abfrage dahingehend, ob die Summe der Drehmomente aus dem aus der manuell in das Laufrad eingeleiteten Antriebskraft resultierenden Drehmoment und einem gemäß einem Unterstützungsgrad in Abhängigkeit von der manuell in das Laufrad eingeleiteten Antriebskraft durch den Antriebsmotor bereitstellbaren Drehmoment, ausgedrückt durch den Parameter M_GR(1+x) größer ist als das momentan von dem Antriebsmotor bereitgestellte Drehmoment, welches gemäß der aktivierten Drehmomentsregelung im Zuge dieser Regelung berechnet wird.

Wird diese Abfrage verneint, so bedeutet dies, dass mit der vom Rollstuhlfahrer manuell eingeleiteten Kraft und der durch den Unterstützungsgrad entsprechend hinzukommenden Antriebskraft des Antriebsmotors kein ausreichendes Drehmoment erzeugt würde, dass größer ist als dasjenige Drehmoment, was momentan durch die Drehfrequenzregelung bereitgestellt wird. Würde die Drehfrequenzregelung daher deaktiviert werden, würde dies zu einer unerwünschten Richtungsumkehr führen. Die Drehfrequenzregelung bleibt daher in diesem Fall aktiv und es erfolgt wiederum die Abfrage dahingehend, ob eine Drehung des Rades in der ersten Richtung vorliegt, d.h. die Drehfrequenz N-Rad größer als Null ist. Ist dies nicht der Fall, wird der Merker NR auf 0 gesetzt. Ist dies der Fall, wird der Wert des Zeitschalters ARF-Timer auf 5 Sekunden gesetzt und der Merker NR auf den Wert 1.

Wird demgegenüber bei der zuvor erläuterten Abfrage der Werte des hypothetisch aufsummierten Drehmoments mit dem aktuellen Drehmoment des Antriebmotors gemäß Drehfrequenzregelung festgestellt, dass dieser hypothetische Summenwert größer ist, so bedeutet dies, dass das Rad bei aktivierter Drehmomentsteuerung in Wunschrichtung drehen würde. In diesem Fall wird die Drehfrequenzregelung deaktiviert und die Drehmomentsteuerung aktiviert. Danach findet erneut die die Drehfrequenz des Rades betreffende Abfrage statt.

Der linke Zweig des Flussdiagramms gemäß Fig. 5 verläuft in analoger Weise, wobei eine negative Kraft und eine negative Drehfrequenz des Antriebsrades bedeuten, dass Kraft und Drehung des Antriebsrades in gleiche Richtung verlaufen. Diese können beispielsweise als rechtsdrehend im Uhrzeigersinn oder linksdrehend im Gegenuhrzeigersinn definiert sein.

Entsprechend wird bei Rechtsdrehung, das heißt bei Werten größer Null der Merker mit NR entsprechend dem rechten Zweig des Flussdiagramms gemäß Fig. 5 und bei Linksdrehung, das heißt bei Werten kleiner Null der Merker mit NL gemäß dem linken Zweig des Flussdiagramms gemäß Fig. 5 bezeichnet.

In dem Ablaufdiagramm gemäß Fig. 5 wird der Merker NR auf den Wert 1 gesetzt, wenn bei einer positiven Kraft am Greifring eine positive Drehfrequenz des Rades vorliegt. Andernfalls wird der Merker NR auf 0 gesetzt. Entsprechend wird der Merker NL auf 1 gesetzt, wenn bei einer negativen Kraft am Greifring eine negative Drehfrequenz des Rades vorliegt.

Die beiden unteren Rauten im zentralen Zweig des Flussdiagramms gemäß Fig. 5 betreffen Fälle, in denen keine Kraft in den Greifring eingeleitet wird. Durch die Bereitstellung des Merkers wird jedoch die Sollrichtung der Raddrehung gemäß vorheriger Zyklen erkannt. Bei der untersten Raute im zentralen Zweig des Ablaufdiagramms gemäß Fig. 5 findet die Abfrage statt, ob die Drehfrequenz des Rades größer Null ist und gleichzeitig der Merker NL den Wert 1 hat, was bedeuten würde, dass bei positiver Kraft eine negative Drehfrequenz des Rades vorlag. In diesem Fall würden somit die Soll-Richtung der Drehfrequenz und die Ist-Richtung auseinander fallen. Entsprechend wird bei Bejahung der Abfrage die Drehfrequenzregelung aktiviert.

Bezugszeichen:
- 10: Laufräder
- 11: Nabe
- 12: Greifring
- 13: Streben
- 14: Speichenelemente
- 17: Speichen
- 18: Felge
- 19: Reifen

## Patentansprüche

1. Hilfsantriebsvorrichtung für einen Rollstuhl
mit einem Antriebsmotor,
mit einem Laufrad (10),
mit einer Sensoreinrichtung, die dazu ausgelegt ist, eine manuell in das Laufrad (10) eingeleitete Antriebskraft hinsichtlich Größe und Richtung zu erfassen, und
mit einer Steuereinrichtung, die dazu ausgelegt ist, den Antriebsmotor zum Antrieb des Laufrades (10) gemäß einem Unterstützungsgrad in Abhängigkeit von der manuell in das Laufrad (10) eingeleiteten Antriebskraft anzusteuern,
**dadurch gekennzeichnet,**
**dass** die Steuereinrichtung einen Antirückroll-Betriebsmodus aufweist, in dem sie dazu ausgelegt ist, den Antriebsmotor so anzusteuern, dass ein unbeabsichtigtes Rollen des Laufrades (10) entgegen einer Sollrichtung der Raddrehung vermieden wird,
wobei die Steuereinrichtung dazu ausgelegt ist, die Sollrichtung der Raddrehung aus der Richtung der manuell in das Laufrad (10) eingeleiteten Antriebskraft zyklisch zu erfassen und die Sollrichtung gemäß vorheriger Zyklen zu erkennen, wenn keine manuelle Antriebskraft in das Laufrad (10) eingeleitet wird.

2. Hilfsantriebsvorrichtung nach Anspruch 1, **dadurch gekennzeichnet, dass** die Steuereinrichtung dazu ausgelegt ist, in einem Normal-Betriebsmodus zu arbeiten, in dem das Vermeiden eines unbeabsichtigten Rollens des Laufrades (10) außer Kraft gesetzt ist, und alternativ in dem Antirückroll-Betriebsmodus zu arbeiten, um den Antriebsmotor bei Bedarf so anzusteuern, dass ein unbeabsichtigtes Rollen des Laufrades (10) vermieden wird.

3. Hilfsantriebsvorrichtung nach Anspruch 2, **dadurch gekennzeichnet, dass** der Normal-Betriebsmodus eine Drehmomentsteuerung umfasst, die bewirkt, dass der Antriebsmotor zum Antrieb des Laufrades (10) in Abhängigkeit von der manuell in das Laufrad (10) eingeleiteten Antriebskraft angesteuert wird.

4. Hilfsantriebsvorrichtung nach Anspruch 1, 2 oder 3, **dadurch gekennzeichnet, dass** der Antirückroll-Betriebsmodus eine Drehfrequenzregelung umfasst, die die Drehfrequenz des Laufrades (10) regelt.

5. Hilfsantriebsvorrichtung nach Anspruch 4, **dadurch gekennzeichnet, dass** in dem Antirückroll-Betriebsmodus alternativ die Drehmomentsteuerung oder die Drehfrequenzregelung zum Einsatz kommt.

6. Hilfsantriebsvorrichtung nach Anspruch 5, **dadurch gekennzeichnet, dass** die Steuereinrichtung dazu ausgelegt ist, einen Wechsel zwischen Drehmomentsteuerung und Drehfrequenzregelung in Abhängigkeit von Betriebsparametern zu bewirken.

7. Hilfsantriebsvorrichtung nach Anspruch 6, **dadurch gekennzeichnet, dass** die Betriebsparameter einen oder mehrere Parameter aufweisen aus der Gruppe Drehfrequenz des Laufrades, Drehrichtung des Laufrades, Größe der manuell in das Laufrad (10) eingeleiteten Antriebskraft, Richtung der manuell in das Laufrad (10) eingeleiteten Antriebskraft, Summe des aus der manuell in das Laufrad (10) eingeleiteten Antriebskraft resultierenden Drehmoments und eines gemäß einem Unterstützungsgrad in Abhängigkeit von der manuell in das Laufrad (10) eingeleiteten Antriebskraft durch den Antriebsmotor bereitstellbaren Drehmoments, das durch den Antriebsmotor aktuell bereitgestellte Drehmoment, Wert eines Zeitschalters.

8. Hilfsantriebsvorrichtung nach einem der vorstehenden Ansprüche, **dadurch gekennzeichnet, dass** der Antirückroll-Betriebsmodus manuell einschaltbar und/ oder ausschaltbar ist.

9. Hilfsantriebsvorrichtung nach Anspruch 8, **dadurch gekennzeichnet, dass** mehrere Unterstützungsgrad-Schalter vorgesehen sind, mit denen unterschiedliche Unterstützungsgrade vorwählbar sind, und dass der Antirückroll-Betriebsmodus über einen oder jeden der Unterstützungsgrad-Schalter einschaltbar und/oder ausschaltbar ist.

10. Hilfsantriebsvorrichtung nach Anspruch 9, **dadurch gekennzeichnet, dass** sich die Steuereinrichtung beim Einschalten im Normal-Betriebsmodus befindet.

11. Hilfsantriebsvorrichtung nach Anspruch 9, **dadurch gekennzeichnet, dass** sich die Steuereinrichtung beim Einschalten in demjenigen Betriebsmodus befindet, in dem sie sich beim vorherigen Ausschalten befand.

12. Hilfsantriebsvorrichtung nach einem der vorstehenden Ansprüche, **gekennzeichnet durch** einen Greifring (12), über den Kraft manuell in das Laufrad (10) einleitbar ist.

13. Hilfsantriebsvorrichtung nach einem der vorstehenden Ansprüche, **dadurch gekennzeichnet, dass** der Antriebsmotor als Elektromotor ausgeführt ist.

14. Hilfsantriebsvorrichtung nach Anspruch 13, **dadurch gekennzeichnet, dass** der Antriebsmotor zusammen mit einer wiederaufladbaren Batterie und der Steuereinrichtung in der Nabe (11) des Laufrades (10) angeordnet ist.

15. Rollstuhl mit einer Hilfsantriebsvorrichtung nach einem der Ansprüche 1 bis 14.

## Claims

1. Drive assistance device for a wheel chair, comprising a drive motor,
a driving wheel (10),
a sensor means which is adapted to detect a drive force manually induced into said driving wheel (10) concerning amount and direction, and
a control unit which is adapted to control said drive motor for driving a driving wheel (10) in accordance with a degree of drive assistance depending on the drive force manually induced into the driving wheel (10),
**characterized in that**
said control unit comprises an anti-rollback operational mode which is designed such that the drive motor is controlled such that an unintended rolling of the driving wheel (10) against a target direction of the rotation of the wheel is avoided,
wherein said control unit is designed to cyclically detect the target direction of the rotation of said wheel from the direction of the drive force manually induced into said driving wheel (10) and to detect the target direction in accordance with previous cycles when no manual drive force is induced into said driving wheel (10).

2. Drive assistance device according to claim 1, **characterized in that** the control unit is designed such that it operates in a normal operational mode in which avoiding of an unintended rolling of the driving wheel (10) is disabled and, alternatively, in said anti-rollback operational mode, in which the drive motor, if needed, is controlled such that an unintended rolling of the driving wheel (10) is avoided.

3. Drive assistance device according to claim 2, **characterized in that** the normal operational mode comprises a torque control which causes the drive motor for driving the driving wheel (10) to be controlled in dependence of a drive force manually induced in said driving wheel (10).

4. Drive assistance device according to claim 1, 2 or 3, **characterized in that** said anti-rollback operational mode comprises a rotational frequency control in which the rotational frequency of the driving wheel (10) is controlled.

5. Drive assistance device according to claim 4, **characterized in that** in said anti-rollback operational mode alternatively the torque control or the rotational frequency control is used.

6. Drive assistance device according to claim 5, **characterized in that** the control unit is designed such that a change between torque control and rotational frequency control is effected depending on operational parameters.

7. Drive assistance device according to claim 6, **characterized in that** the operational parameters include one or more parameters of the group comprising: rotational frequency of the driving wheel, rotational direction of the driving wheel, magnitude of the drive force manually induced into the driving wheel (10), direction of the drive force manually induced into the driving wheel (10), sum of the torque resulting from the drive force manually induced into the driving wheel (10), and a torque provided by that driving motor in accordance with a degree of drive assistance depending on the drive force manually induced into the driving wheel (10), the torque currently provided by said driving motor, the value of the timer switch.

8. Drive assistance device according to any of the preceding claims, **characterized in that** the anti-rollback operational mode can be manually switched on or can be manually switched off or can be manually switched on and off.

9. Drive assistance device according to claim 8, **characterized in that** a plurality of drive assistance degree switches is provided serving to preset different degrees of drive assistance and that the anti-rollback operational mode can be switched on or off or on and off by one or each of said drive assistance degree switches.

10. Drive assistance device according to claim 9, **characterized in that** the control unit is in the normal operational mode when switched on.

11. Drive assistance device according to claim 9, **characterized in that** the control unit is, when switched on, in the same operational mode in which it had been before it was switched off.

12. Drive assistance device according to any of the preceding claims, **characterized in that** a force can be manually induced into the driving wheel (10) via a hand rim (12).

13. Drive assistance device according to any of the preceding claims, **characterized in that** the drive motor is an electric motor.

14. Drive assistance device according to claim 13, **characterized in that** the drive motor and a rechargeable battery and the control unit are housed in the hub (11) of the driving wheel (10).

15. Wheel chair having a drive assistance device according to any of claims 1 to 14.

## Revendications

1. Dispositif de propulsion auxiliaire pour un fauteuil roulant
comportant un moteur d'entraînement,
comportant une roue de roulement (10),
comportant un dispositif à capteur qui est destiné à détecter une force d'entraînement engagée manuellement dans la roue de roulement (10) en termes de grandeur et de direction, et
comportant un dispositif de commande qui est destiné à commander le moteur d'entraînement pour entraîner la roue de roulement (10) selon un degré d'assistance en fonction de la force d'entraînement engagée manuellement dans la roue de roulement (10),
**caractérisé en ce que**
le dispositif de commande présente un mode de fonctionnement anti-recul, dans lequel il est destiné à commander le moteur d'entraînement de manière à éviter un roulement involontaire de la roue de roulement (10) contre une direction de consigne de la rotation de roue,
le dispositif de commande étant destiné à détecter de manière cyclique la direction de consigne de la rotation de roue à partir de la direction de la force d'entraînement engagée manuellement dans la roue de roulement (10) et à identifier la direction de consigne selon des cycles précédents si aucune force d'entraînement manuelle n'est engagée dans la roue de roulement (10).

2. Dispositif de propulsion auxiliaire selon la revendication 1, **caractérisé en ce que** le dispositif de commande est destiné à fonctionner dans un mode de fonctionnement normal, dans lequel l'évitement d'un roulement involontaire de la roue de roulement (10) est annulé, et à fonctionner en variante dans le mode de fonctionnement anti-recul pour commander si nécessaire le moteur d'entraînement de manière à éviter un roulement involontaire de la roue de roulement (10).

3. Dispositif de propulsion auxiliaire selon la revendication 2, **caractérisé en ce que** le mode de fonctionnement normal comprend une commande de couple de rotation qui provoque la commande du moteur d'entraînement pour entraîner la roue de roulement (10) en fonction de la force d'entraînement engagée manuellement dans la roue de roulement (10).

4. Dispositif de propulsion auxiliaire selon la revendication 1, 2 ou 3, **caractérisé en ce que** le mode de fonctionnement anti-recul comprend une régulation de fréquence de rotation qui régule la fréquence de rotation de la roue de roulement (10).

5. Dispositif de propulsion auxiliaire selon la revendication 4, **caractérisé en ce que**, dans le mode de fonctionnement anti-recul, la commande de couple de rotation ou la régulation de fréquence de rotation est utilisée alternative.

6. Dispositif de propulsion auxiliaire selon la revendication 5, **caractérisé en ce que** le dispositif de commande est destiné à provoquer un changement entre la commande de couple de rotation et la régulation de fréquence de rotation en fonction de paramètres de fonctionnement.

7. Dispositif de propulsion auxiliaire selon la revendication 6, **caractérisé en ce que** les paramètres de fonctionnement présentent un ou plusieurs paramètre(s) parmi le groupe composé de fréquence de rotation de la roue de roulement, direction de rotation de la roue de roulement, grandeur de la force d'entraînement engagée manuellement dans la roue de roulement (10), direction de la force d'entraînement engagée manuellement dans la roue de roulement (10), somme du couple de rotation résultant de la force d'entraînement engagée manuellement dans la roue de roulement (10) et d'un couple de rotation pouvant être fourni par le moteur d'entraînement selon un degré d'assistance en fonction de la force d'entraînement engagée manuellement dans la roue de roulement (10), le couple de rotation actuellement fourni par le moteur d'entraînement, valeur d'une minuterie.

8. Dispositif de propulsion auxiliaire selon une des revendications précédentes, **caractérisé en ce que** le mode de fonctionnement anti-recul peut être activé et/ou désactivé manuellement.

9. Dispositif de propulsion auxiliaire selon la revendication 8, **caractérisé en ce que** plusieurs commutateurs de degré d'assistance sont prévus, lesquels permettent de présélectionner différents degrés d'assistance, et **en ce que** le mode de fonctionnement anti-recul peut être activé et/ou désactivé par le biais d'un ou de chacun des commutateurs de degré d'assistance.

10. Dispositif de propulsion auxiliaire selon la revendication 9, **caractérisé en ce que** le dispositif de commande se trouve au moment de l'activation dans le mode de fonctionnement normal.

11. Dispositif de propulsion auxiliaire selon la revendication 9, **caractérisé en ce que** le dispositif de commande se trouve au moment de l'activation dans le mode de fonctionnement où il se trouvait lors de la désactivation précédente.

12. Dispositif de propulsion auxiliaire selon une des revendications précédentes, **caractérisé par** une bague de préhension (12) qui permet d'engager la force manuellement dans la roue de roulement (10).

13. Dispositif de propulsion auxiliaire selon une des revendications précédentes, **caractérisé en ce que** le moteur d'entraînement est réalisé sous la forme d'un moteur électrique.

14. Dispositif de propulsion auxiliaire selon la revendication 13, **caractérisé en ce que** le moteur d'entraînement est disposé conjointement avec une batterie rechargeable et le dispositif de commande dans le moyeu (11) de la roue de roulement (10).

15. Fauteuil roulant comportant un dispositif de propulsion auxiliaire selon une des revendications 1 à 14.
